# EUROPEAN PATENT SPECIFICATION

(11) **EP 2 881 592 B1**
(45) Date of publication and mention of the grant of the patent: **12.10.2016**
(21) Application number: 14190065.4
(22) Date of filing: 23.10.2014
(51) Int. Cl.: F04D 29/42, A01M 7/00, B05B 12/14, F04D 15/00, F16K 11/087, F16K 27/06, F04D 29/02, F04D 29/70

(54) **Casting for pump system on agricultural sprayer**
Gussstück für Pumpensystem auf einer Feldspritze
Moulage de système de pompe d'un pulvérisateur agricole

(30) Priority: 05.12.2013 GB 201321495
(43) Date of publication of application: 10.06.2015
(73) Proprietor: Agco Netherlands B.V., 5971 NG Grubbenvorst (NL)
(72) Inventor: Hiddema, Joris Jan, 5971 NG Grubbenvorst (NL)
(74) Representative: AGCO Intellectual Property Department

(56) References cited:
- WO-A1-95/02791
- DE-A1-102006 023 379

## Description

### FIELD OF INVENTION

The invention relates to pump systems for agricultural sprayers which serve to distribute fluid between various fluid sources and consumers including tanks, water supplies and spray booms. In particular, the invention relates to unitary castings for such pump systems.

### BACKGROUND

Agricultural sprayers are employed by farmers and contractors alike to apply to a crop field pesticides and/or nutrients in the form of liquid solutions. A sprayer typically comprises a main tank for storing the liquid to be applied and a plurality of liquid application nozzles arranged along a boom, the boom extending in a direction transverse to the forward direction of travel. An on-board pump system serves to pump the fluid from the tank to the nozzles during operation.

In addition to the main tank and spray nozzles, the pump system may also serve to convey fluid between other sources and consumers. For example, in a fill mode, the pump may drive water from an external source to the main tank. In a recirculation mode the pump may take pesticide solution from the bottom of the tank and inject it back in at the top. In a cleaning mode, clean water from a clean water tank may be passed through the pipework and sprayed into the main tank.

The overall pump system may, therefore, include a multitude of components including valves, filters, joints and pipes spread over the vehicle thus demanding complex pipe networks and valve arrangements. The complex arrangements present many corners and "dead spots" where chemicals can become trapped making it difficult to clean. There is thus a desire to simplify the pump systems and, in turn, reduce complexity and manufacturing cost.

WO 95/02791 A1 discloses in figures 9, 10 and 13 a cast centrifugal pump casing including a ball valve casing, yet without a filter housing. DE 10 2006 023379 A1 discloses a centrifugal pump casing with an integrally cast filter housing, wherein the impeller chamber and the filter housing are in fluid communication.

### SUMMARY OF INVENTION

It is an object of the invention to provide a pump system for an agricultural sprayer which employs fewer components.

It is another object of the invention to provide a more compact pump system for an agricultural sprayer.

It is yet a further object of the invention to provide an agricultural sprayer that is designed more ergonomically for the operator.

In accordance with the invention there is provided a unitary casting comprising a centrifugal pump casing and a portion of a ball valve casing together defining a continuous first open-ended chamber, and a filter housing defining a second open-ended chamber isolated from the first chamber, the first chamber being suitable for housing an impellor on a rotation axis and comprising an axial inlet opening, a tangential outlet opening and an axial aperture for receiving an impellor driveshaft.

By integrating a filter housing with a pump and valve housing in a single casting a more compact sprayer pump system can be achieved, and with fewer components.

It should be understood that a centrifugal pump has both a suction side from which fluid is drawn, and a pressure side to which fluid is ejected.

The unitary casting is preferably embodied in a pump system which comprises a centrifugal pump, a ball valve, and a multi-port manifold providing a further portion of the ball valve casing, the manifold comprising a first port connected to the ball valve, and a second port connected to the filter housing. The manifold serves to connect the two chambers of the unitary casting. Advantageously therefore, together the unitary casting and the manifold alone provide housings for a pump, a valve and a plurality of plumbing connections. The manifold itself may be cast which delivers these components of the pump system from only two cast units.

The casting preferably comprises a portion of a first ball valve casing on a suction side of the pump and a portion of a second ball valve casing on a pressure side of the pump. In this case the system may further comprise a suction side manifold providing a further portion of the first ball valve casing and a pressure side manifold providing a further portion of the second ball valve casing. Three components alone, namely the unitary casting and two manifolds, provide housings for the pump, two distribution valves and multiple connections for plumbing to the tanks, water supplies and consumers on the sprayer. In addition to the reduction in component numbers, the resulting pump system is more compact.

The casting preferably comprises a first filter housing and a second filter housing, wherein the suction side manifold provides a fluid passage from the first filter housing to the first ball valve, and the pressure side manifold provides a fluid passage from the second filter housing to the second ball valve.

The pump preferably comprises an impellor that rotates on a pump axis, wherein the first ball valve comprises an outlet in communication with an inlet side of the centrifugal pump casing, the outlet being aligned with the pump axis.

The first ball valve preferably rotates around the pump axis to selectively connect the outlet with one of a plurality of inlets of the suction side manifold.

The casting may further comprise a pipe, wherein the multi-port manifold comprises a third port connected to the pipe. Advantageously, the resulting pump system is more compact and is formed from fewer components.

The pump system is preferably embodied in an agricultural sprayer.

The sprayer may comprise an operator workstation having a console that includes an opening to access the filter housing. The console may include a user interface panel which is mounted on the unitary casting thereby avoiding the need for additional brackets. The operator workstation may include a hand operated valve connected to the filter housing. By providing the operator workstation around the pump system, or at least the pumps and distribution valves, the ergonomics of operating the machine are improved.

The suction side manifold may be plumbed to one or more of a tank for storing pesticide solution, a clean water tank and a coupling for attaching a filler hose. The pressure side manifold may be plumbed to one or more of the main tank, the clean water tank, an unloading coupling and a spray line connected to the boom.

### BRIEF DESCRIPTION OF DRAWINGS

Further advantages of the invention will become apparent from reading the description of specific embodiments with reference to the appended drawings in which:-
Figure 1 is a side view of an agricultural sprayer fitted with a pump system in accordance with the invention;
Figure 2 is a diagrammatic fluid circuit of the pump system in accordance with the embodiment of the invention;
Figure 3 is a rear lower right perspective view of a pump system in accordance with a first embodiment of the invention;
Figure 4 is a front upper left perspective view of the pump system of Figure 3;
Figure 5 is a front upper left view a unitary casting forming part of pump system of Figure 3;
Figure 6 is a rear lower right view of the unitary casting of Figure 5;
Figure 7 is a rear upper right exploded perspective view of part of the pressure side ball valve.
Figure 8 is a front upper right perspective view of the pressure side ball valve included in the pump system of Figure 3;
Figure 9 is a rear upper right perspective view of part of the pump system of Figure 3 shown with the suction side ball valve omitted;
Figure 10 is a plan view of the part of the pump system shown in Figure 9;
Figure 11 is a front view of the pump system of Figure 10 showing the pressure side ball valve in exploded form;
Figure 12 is front upper left perspective view of the operator work station of the sprayer of Figure 1;
Figure 13 is a rear left perspective view of part of a pump system in accordance with a second embodiment of the invention;
Figure 14 is a front lower right perspective view of the pump system part shown in Figure 13; and,

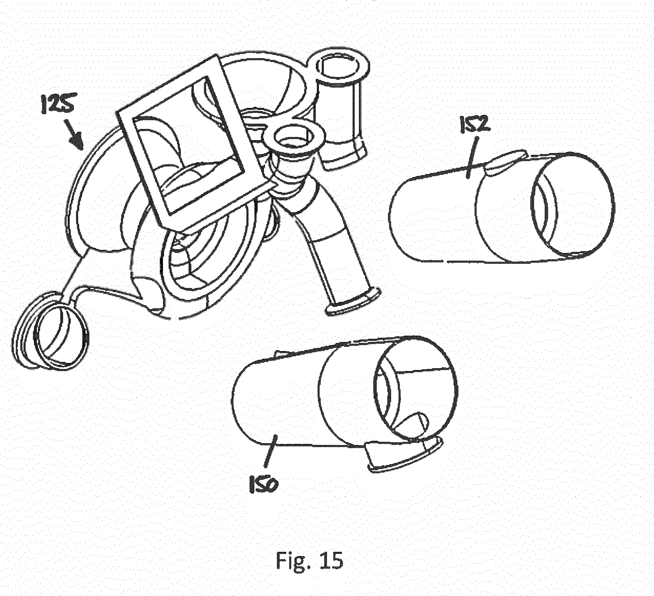

Figure 15 is an exploded front upper left perspective view of part of an alternative pump system.

### DETAILED DESCRIPTION OF DRAWINGS

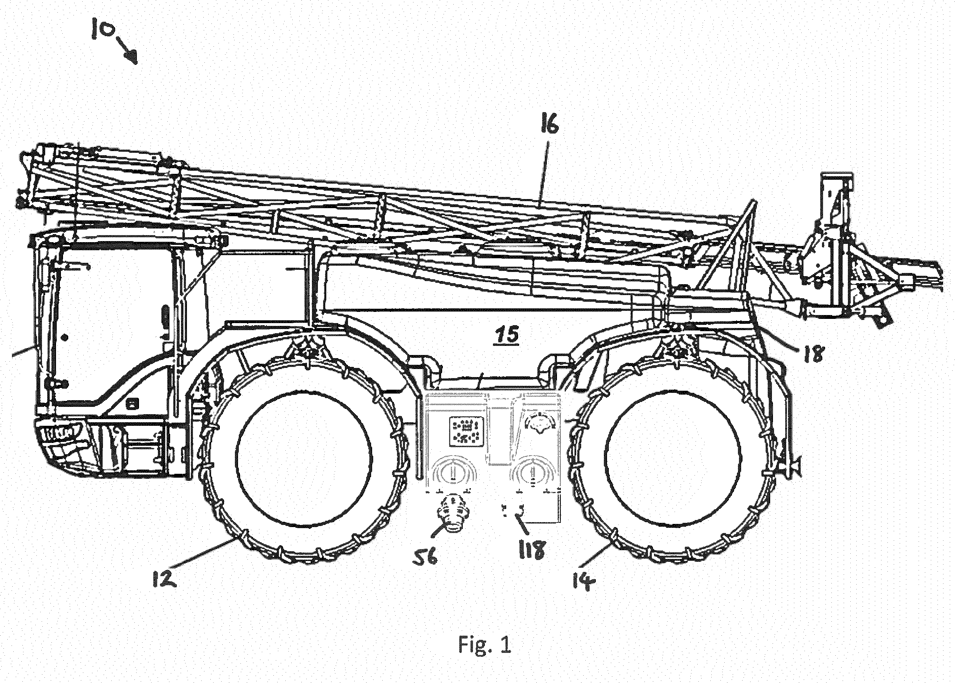

With reference to Figure 1 a self-propelled agricultural sprayer 10 comprises front wheels 12 and rear wheels 14. An on-board main storage tank 15 serves to store the pesticide or nutrient solution for application to the field. A spray boom 16 (shown in a folded state) extends transversely relative to the forward direction of travel and includes a number of spray nozzles for applying the solution. An auxiliary, clean water, tank 18 is also provided for storing a volume of clean water which is used to rinse the plumbing and main tank 15 after the spraying operation.

Although a self-propelled application machine is shown and described hereinafter, it should be understood that the embodied invention is applicable to other agricultural sprayers including pull-type (towed) sprayers and (3-point linkage) mounted sprayers.

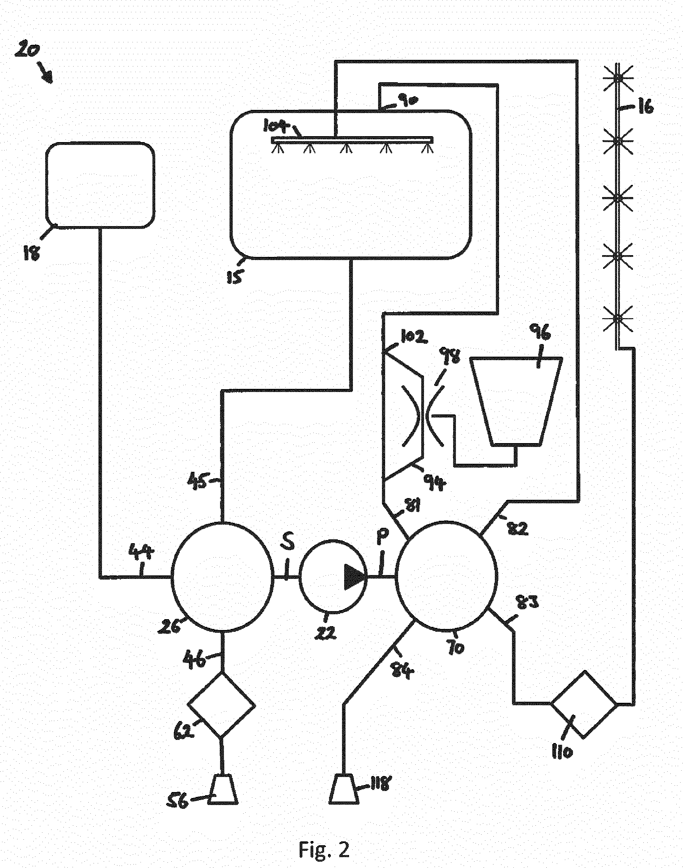

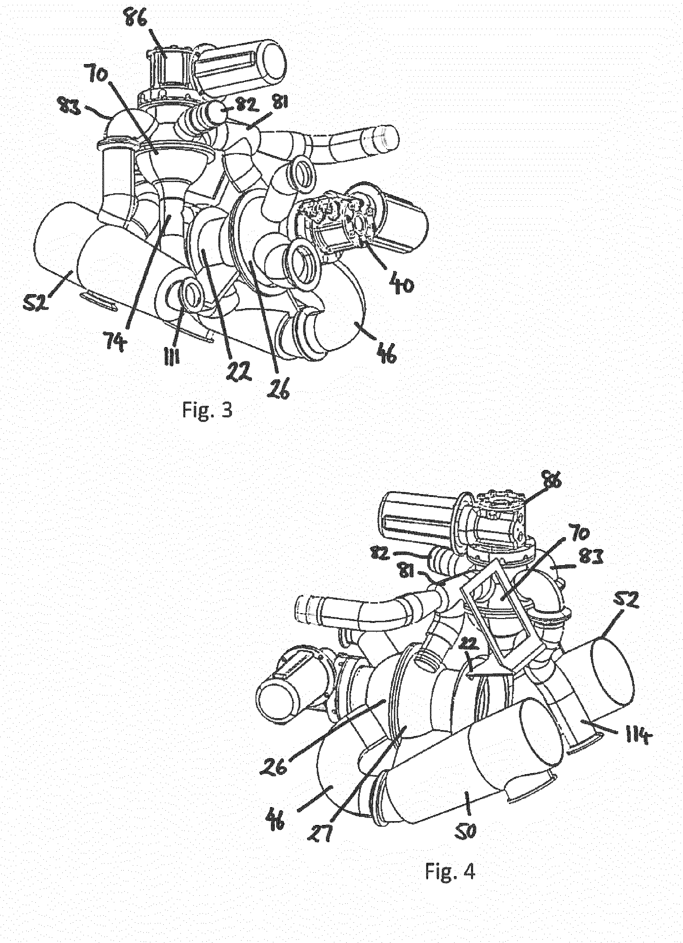

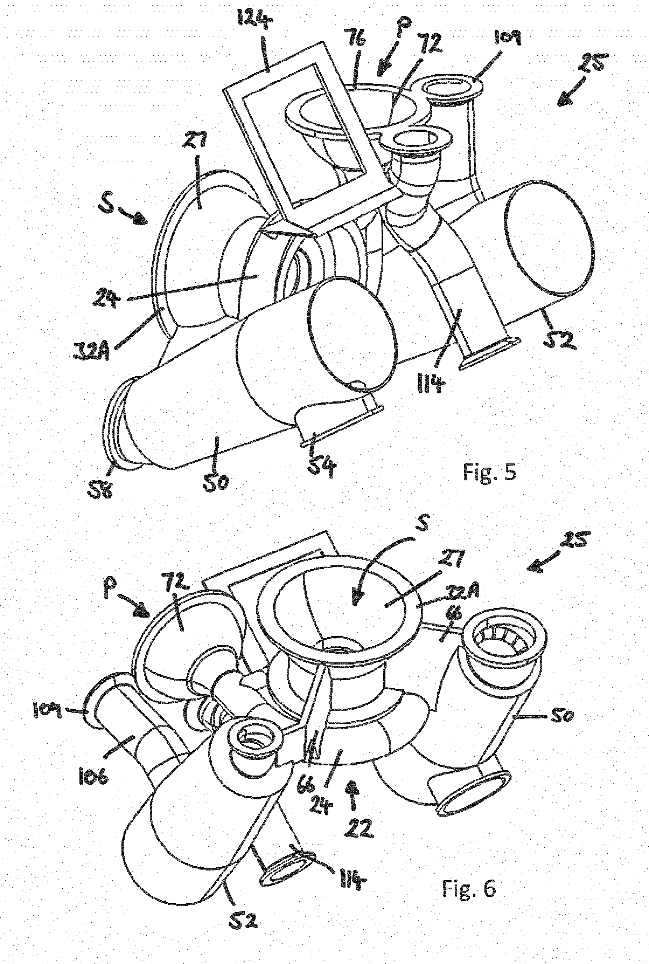

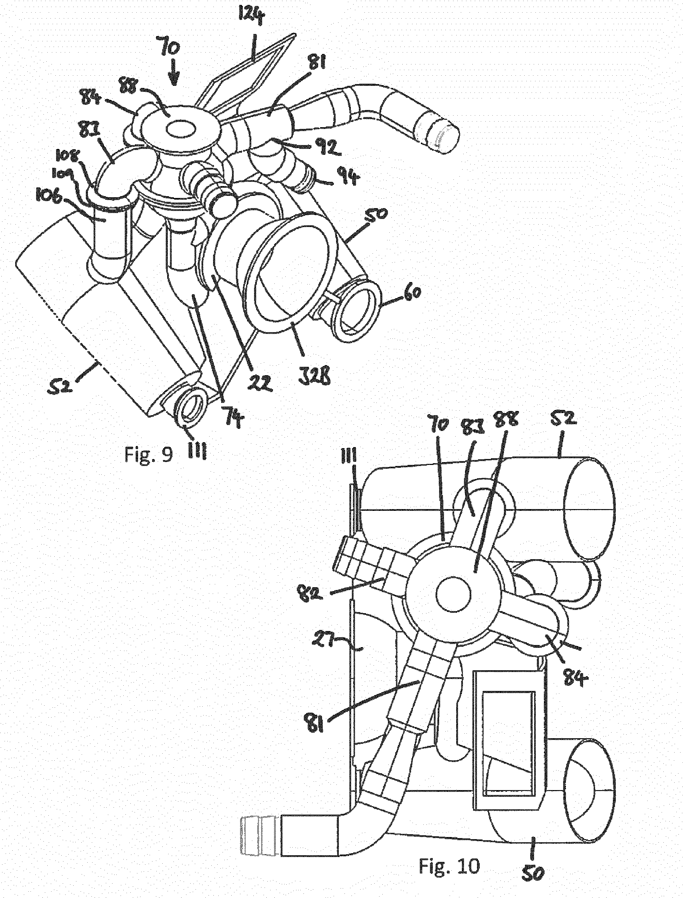

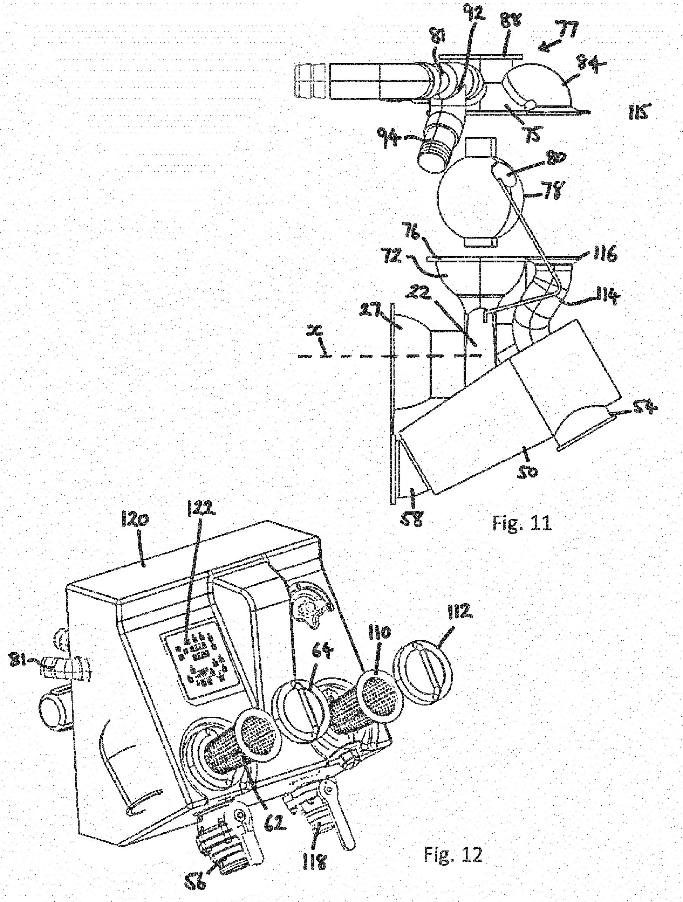

With reference to Figure 2, a pump system 20 serves to convey and distribute fluid between the various fluid sources and consumers. With reference also to Figures 3 to 12, the pump system 20 comprises a centrifugal pump 22 having a suction side S and pressure side P. Centrifugal pump 22 comprises a casing 24 provided by a unitary casting 25 which is shown in isolation in Figures 5 and 6. Pump casing 24 encloses an impellor (not shown) that rotates on a pump axis X (Fig. 11). The impellor is driven by a motor (also not shown) mounted on the pump casing 24 opposite the suction side S. The motor may be hydraulic or electric. Furthermore, the motor may alternatively be mounted away from the pump 24 and connected mechanically by a belt and pulley system for example.

With particular reference to Figures 5 and 6, fluid is drawn by pump 24 on suction side S along the pump axis and is ejected tangentially at pressure side P. The flow rate, as with any pump, can be varied by changing the speed of the impellor.

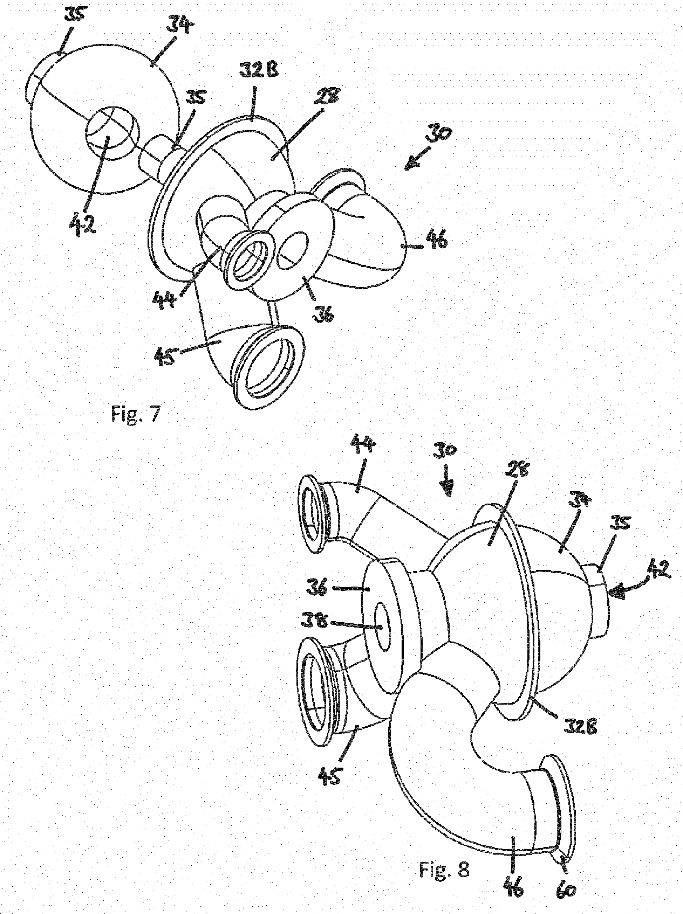

On the suction side of the pump 24 a 3-way ball valve 26 is provided to selectively connect one of three fluid sources to the suction side S of the pump 24. Suction side valve 26 includes a spherical casing formed in two portions 27,28. A first portion 27 is integrated into the unitary casting 25 as a semi-spherical receptacle. A second portion 28 is provided by a compound suction side manifold 30 shown in isolation in Figure 7.

First and second portions 27,28 sealingly mate around matching circular rims 32A,32B and provide a spherical casing to enclose spherical ball 34, best viewed in Figure 7. Ball 34 includes opposing cylindrical pegs 35 each serving to engage in respective cylindrical recesses provided in the casing portions 27,28. Suction side manifold 30 includes an end hub 36 mounted on the outside of pump casing 28 and including a central aperture 38 giving access to the ball 34 of suction side valve 26. A simple electrical motor 40 is mounted on the exterior of hub 36 and serves to control rotation of the ball 34 between one of several positions.

Ball 34 includes a bore 42 having a dog-legged shape and which passes through the centre of the pump side peg 35. Rotation of ball 34 by motor 40 selectively connects the suction side S of pump 22 to one of three inlet pipes 44,45,46 cast into the suction side manifold 30.

A first one of the pipes 44 is plumbed to clean water tank 18. A second pipe 45 is plumbed to an outlet 48 of solution tank 15. A third, substantially U-shaped pipe 46, is connected directly to a suction side filter housing 50 which will be described in more detail below.

During assembly the suction side manifold 28 is mounted to the suction side S of unitary casting 25 together providing a suction side distribution valve 26 which is immediately upstream of centrifugal pump 22. The ball 34 of valve 26 rotates on pump axis X and delivers the fluid along the pump axis into the pump casing 24. Advantageously, the close proximity of valve 26 to centrifugal pump 24 provides improved fluid dynamics and an improved pump efficiency. Furthermore, additional plumbing between the valve 26 and pump 24 is avoided.

Turning back to the unitary casting 25 shown in Figures 5 and 6, a suction side filter housing 50 and a pressure side filter housing 52 are included in the cast structure, one each side of the pump axis X. Suction side pump housing 50 includes at one end a radially-facing inlet flange 54 to which a manual, lever-operated, tap and coupling 56 are mounted. At the opposite end of housing 50 a substantially axially-aligned outlet flange 58 is provided for mating with a corresponding flange 60 provided on the end of pipe 46 (Figure 8). The suction side filter housing 50 houses a replaceable filter 62 which is closed by a removable protective cap 64 (Fig. 12). Closable coupling 56 allows the operator to secure a hose to the sprayer 10 for filling main tank 15 or clean water tank 18. Pressure side filter housing 52 will be described in more detail below.

Both filter housings 50,52 are secured to the pump casing 24 by respective strengthening plates 66, best seen in Figure 6 and cast into structure 25.

Turning to the pressure side P, a pressure side distribution valve 70 is positioned immediately downstream (with respect to fluid flow) of the pump 24. Valve 70 is also of a ball valve type and is similar in construction to the suction side valve 26 described above. Casting 25 includes the bottom half 72 of spherical valve casing and a passage 74 providing a fluid connection to the output of pump 22. The top half 75 of the pressure side valve casing is formed as part of a pressure side manifold 77.

The bottom portion 72 and top portion 75 are sealed together around a mating rim 76. Inside the casing a ball 78 (with a dog-leg shaped passage 80) is housed for rotation so as to selectively connect the output of pump 22 to one of four outlet ports having corresponding pipes 81,82,83 and 84. An electric motor 86 (shown in Figs. 3 and 4) is mounted to an end hub 88 which is cast into the pressure side manifold 77.

First pipe 81 is plumbed to an inlet 90 of solution tank 15. Downstream of valve 70 a junction 92 routes a portion of the conveyed fluid via a separate branch 94 and a chemical inductor 96. The chemical inductor 96 is a separate receptacle provided for an operator to add concentrated chemicals in a safe manner. A venturi valve 98 draws the chemical from the inductor 96 into the branch 94. The chemical-rich solution re-joins the main pipe 81 at junction 102 for injection into the main tank 15.

A second of the pressure side outlets 82 is plumbed to a rinse line which serves to rinse the main product tank 15 and terminates with a nozzle bar 104 located within the tank 15.

A third pressure side outlet 83 is connected directly to an inlet pipe 106 of the pressure side filter housing 52. Mating flanges 108,109 are provided on respective ends of the third outlet pipe 83 and filter housing inlet pipe 106 to provide a sealing connection when the pressure side manifold 77 is connected to the unitary casting 25. The pressure side filter housing 52 includes an outlet pipe 111 which extends substantially axially from a lower end and which serves for plumbing to the spray boom 16. The housing 52 accepts a replaceable filter 110 which is held in position by removable cap 112.

The fourth outlet pipe 84 is connected to a downwardly extending pipe 114 which may be integrated into the unitary casting 25. Mating flanges 115,116 provided on the fourth outlet pipe 84 and upper end of pipe 114 respectively are brought into a sealed connection when the pressure side manifold 77 is mounted to unitary casting 25.

At the lower end of pipe 114 a manual tap and coupling 118 is mounted so as to receive an interlocking connecting hose which can be attached/detached as required for emptying one or both of the tanks 15,18.

With reference to Figure 12, an operator work station is provided around the compact pump system described above wherein a cover 120 houses the pump 22 and valves 26,70. The cover 120 includes access openings to the suction side filter housing 50 and pressure side filter housing 52 to allow ergonomic access for replacing the filters 62,110.

Furthermore, the suction side coupling 56 and pressure side coupling 118 extend from the cover 120 for easy reach when coupling hoses (not shown).

A user interface 122 which includes a display and/or control buttons is mounted to a display bracket 124 which is provided by the casting 25. The user interface panel is flush with the surface of cover 120 to provide a compact and ergonomic system.

Turning back to the unitary casting 25, by providing the casing of pump 24 and filter housings 50,52 in a single casting a significant cost reduction by reducing the number of parts is provided. Furthermore, the unitary casting 25 with multiple functions provides for a more compact pump system which simplifies assembly and maintenance.

### Operation

Both the suction side valve 26 and pressure side valve 70 are controlled to selectively distribute fluid between the various sprayer components. During filling of the solution tank a hose may be coupled to suction side coupling 56 which supplies water via the filter 62 through the pump 22 and in to solution tank 15.

During a spraying operation, the suction side valve 26 connects the solution tank 15 to the pump 22 whereas the pressure side valve connects the pump 22 to the pressure side filter 110 and ultimately the boom 16.

### Alternative Embodiment

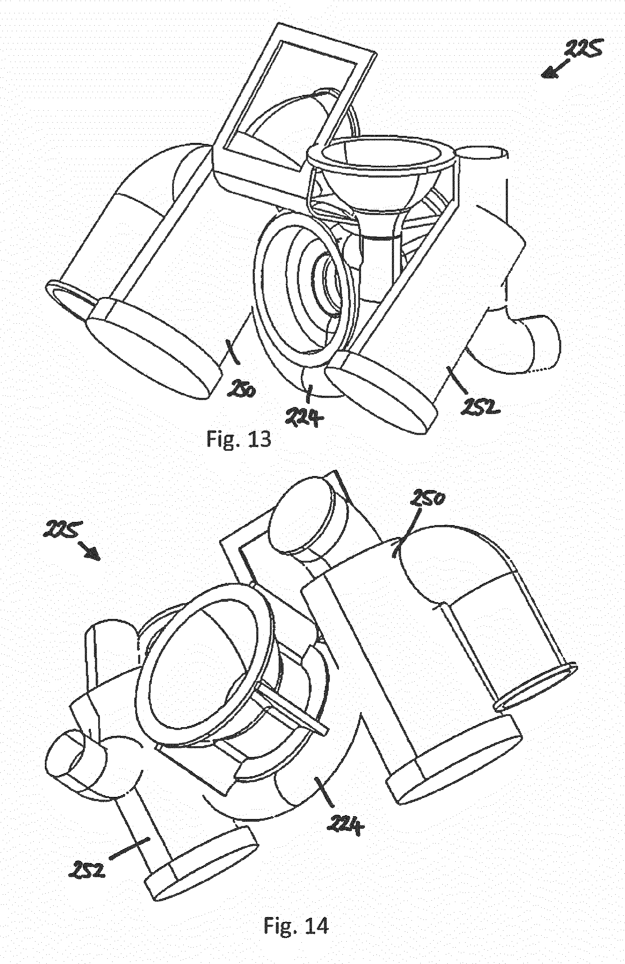

With reference to Figures 13 and 14 an alternative embodiment is illustrated in which a unitary casting 225 includes a pump casing 224, a suction side filter housing 250 and a pressure side filter housing 252. In this example the substantially cylindrical filter housings 250,252 are angled downwardly.

## Claims

1. A unitary casting (25) comprising a centrifugal pump casing (24) and a portion (27;72) of a ball valve casing together defining a continuous first open-ended chamber, the first chamber being suitable for housing an impeller on a rotation axis and comprising an axial inlet opening, a tangential outlet opening and an axial aperture for receiving an impeller driveshaft, the unitary casting being **characterized in that** it also comprises a filter housing (50, 52) defining a second open-ended chamber isolated from the first chamber.

2. A pump system comprising a unitary casting (25) according to Claim 1, a centrifugal pump (22), a ball valve (26;70), and a multi-port manifold (30;77) providing a further portion (28;75) of the ball valve casing, the manifold comprising a first port connected to the ball valve, and a second port (46;83) connected to the filter housing.

3. A pump system according to Claim 2, wherein the casting (25) comprises a portion (27) of a first ball valve casing on a suction side (S) of the pump (22) and a portion (72) of a second ball valve casing on a pressure side (P) of the pump, the system comprising a suction side manifold (30) providing a further portion (28) of the first ball valve casing and a pressure side manifold (77) providing a further portion (75) of the second ball valve casing.

4. A pump system according to Claim 3, wherein the casting comprises a first filter housing (50) and a second filter housing (52), wherein the suction side manifold (30) provides a fluid passage (46) from the first filter housing to the first ball valve, and the pressure side manifold (77) provides a fluid passage (83) from the second filter housing to the second ball valve.

5. A pump system according to Claim 3 or 4, wherein the pump comprises an impellor that rotates on a pump axis, and wherein the first ball valve comprises an outlet in communication with an inlet side of the centrifugal pump casing, the outlet being aligned with the pump axis.

6. A pump system according to Claim 5, wherein the first ball valve rotates around the pump axis (x) to selectively connect the outlet with one of a plurality of inlets of the suction side manifold.

7. A pump system according to any one of Claims 2 to 6, wherein the casting further comprises a pipe, and wherein the multi-port manifold comprises a third port connected to the pipe.

8. An agricultural sprayer (10) comprising a pump system according to any one of Claims 2 to 7.

9. An agricultural sprayer according to Claim 8, comprising an operator workstation having a console that includes an opening to access the filter housing.

10. An agricultural sprayer according to Claim 9, wherein the console includes a user interface panel (122) which is mounted on the unitary casting.

11. An agricultural sprayer according to Claim 9 or 10, wherein the operator workstation includes a hand operated valve connected to the filter housing.

12. An agricultural sprayer according to any one of Claims 8, 9 or 10, when dependent on Claim 3, further comprising a tank for storing pesticide solution, the tank having an outlet that is plumbed to an inlet port of the suction side manifold.

13. An agricultural sprayer according to Claim 12, wherein the tank has an inlet that is plumbed to an outlet port of the pressure side manifold.

14. An agricultural sprayer according to Claim 12 or 13, further comprising a clean water tank having an outlet that is plumbed to an inlet port of the suction side manifold and an inlet that is plumbed to an outlet port of the pressure side manifold.

15. An agricultural sprayer according to any one of Claims 8 to 14, when dependent on Claim 3, further comprising a plurality of fluid dispensing nozzles arranged on a boom (16) and being plumbed to an outlet port of the pressure side manifold.

## Patentansprüche

1. Gemeinsames Formteil oder Gussteil (25), mit einem Zentrifugalpumpengehäuse (24) und einem Teil (27; 72) eines Kugelventilgehäuses, die eine durchgängige erste Kammer mit offenem Ende zusammen definieren, die für das Aufnehmen eines Laufrads auf einer Rotationsachse geeignet ist und eine axiale Einlassöffnung, eine tangentiale Auslassöffnung und eine axiale Öffnung zur Aufnahme einer Laufradantriebswelle aufweist, wobei das gemeinsame Formteil oder Gussteil **dadurch gekennzeichnet ist, dass** es außerdem ein Filtergehäuse (50, 52) aufweist, das eine zweite, von der ersten Kammer abgetrennte, Kammer mit offenem Ende aufweist.

2. Pumpensystem, mit einem gemeinsamen Formteil oder Gussteil (25) nach Anspruch 1, einer Zentrifugalpumpe (22), einem Kugelventil (26; 70) und einem Verteiler (30; 77) mit mehreren Anschlüssen, der einen weiteren Teil (28; 75) des Kugelventilgehäuses bildet, wobei der Verteiler einen ersten mit dem Kugelventil verbundenen Anschluss und einen zweiten mit dem Filtergehäuse verbundenen Anschluss (46; 83) aufweist.

3. Pumpensystem nach Anspruch 2, wobei das Formteil oder Gussteil (25) einen Teil (27) eines ersten Kugelventilgehäuses auf einer Saugseite (S) der Pumpe (22) und einen Teil (72) eines zweiten Kugelventilgehäuses auf einer Druckseite (P) der Pumpe aufweist, und wobei das System einen einen weiteren Teil (28) des ersten Kugelventilgehäuses bildenden saugseitigen Verteiler (30) und einen einen weiteren Teil (75) des zweiten Kugelventilgehäuses bildenden druckseitigen Verteiler (77) aufweist.

4. Pumpensystem nach Anspruch 3, wobei das Formteil oder Gussteil ein erstes Filtergehäuse (50) und ein zweites Filtergehäuse (52) aufweist, wobei der saugseitige Verteiler (30) einen Fluiddurchlass (46) von dem ersten Filtergehäuse zu dem ersten Kugelventil und der druckseitige Verteiler (77) einen Fluiddurchlass (83) von dem zweiten Filtergehäuse zu dem zweiten Kugelventil bildet.

5. Pumpensystem nach Anspruch 3 oder 4, wobei die Pumpe ein Laufrad aufweist, das um eine Pumpenachse rotiert, und wobei das erste Kugelventil einen Auslass aufweist, der in Verbindung mit einer Einlassseite des Zentrifugalpumpengehäuses steht und zu der Pumpenachse ausgerichtet ist.

6. Pumpensystem nach Anspruch 5, wobei das erste Kugelventil um die Pumpenachse (x) rotiert, um wahlweise den Auslass mit einem einer Mehrzahl von Einlässen an dem saugseitigen Verteiler zu verbinden.

7. Pumpensystem nach einem der Ansprüche 2 bis 6, wobei das Formteil oder Gussteil weiterhin eine Leitung aufweist und der Verteiler mit mehreren Anschlüssen einen dritten mit der Leitung verbundenen Anschluss aufweist.

8. Landwirtschaftliche Sprühvorrichtung (10), mit einem Pumpensystem nach einem der Ansprüche 2 bis 7.

9. Landwirtschaftliche Sprühvorrichtung nach Anspruch 8, mit einem Bedienperson-Arbeitsplatz mit einer Konsole, die eine Öffnung für den Zugang zu dem Filtergehäuse aufweist.

10. Landwirtschaftliche Sprühvorrichtung nach Anspruch 9, wobei die Konsole ein Benutzerschnittstellenfeld (122) aufweist, das an dem gemeinsamen Formteil oder Gussteil montiert ist.

11. Landwirtschaftliche Sprühvorrichtung nach Anspruch 9 oder 10, wobei der Bedienperson-Arbeitsplatz ein handbetriebenes mit dem Filtergehäuse verbundenes Ventil aufweist.

12. Landwirtschaftliche Sprühvorrichtung nach einem der Ansprüche 8, 9 oder 10 in Rückbezug auf Anspruch 3, mit einem Tank für ein Bevorraten von Pestizidlösung, wobei der Tank einen Auslass aufweist, der an einen Einlassanschluss des saugseitigen Verteilers angeschlossen ist.

13. Landwirtschaftliche Sprühvorrichtung nach Anspruch 12, wobei der Tank einen Einlass aufweist, der an einen Auslassanschluss des druckseitigen Verteilers angeschlossen ist.

14. Landwirtschaftliche Sprühvorrichtung nach Anspruch 12 oder 13, mit einem Reinwassertank, der einen an einen Einlassanschluss des saugseitigen Verteilers angeschlossenen Auslass und einen an einen Auslassanschluss des druckseitigen Verteilers angeschlossenen Einlass aufweist.

15. Landwirtschaftliche Sprühvorrichtung nach einem der Ansprüche 8 bis 14 in Rückbezug auf Anspruch 3, mit einer Mehrzahl von auf einem Ausleger (16) angeordneten Fluidverteilerdüsen, die an einen Auslassanschluss des druckseitigen Verteilers angeschlossen sind.

## Revendications

1. Moulage unitaire (25) comprenant un carter de pompe centrifuge (24) et une partie (27 ; 72) d'un carter de vanne à boisseau sphérique définissant ensemble une première chambre à extrémité ouverte,
la première chambre étant adaptée de manière à contenir un rouet sur un axe de rotation et comprenant un orifice d'entrée axial, un orifice de sortie tangentiel et une ouverture axiale destinée à recevoir un arbre d'entraînement de rouet, le moulage unitaire étant **caractérisé en ce qu'**il comprend aussi un logement de filtre (50, 52) définissant une seconde chambre à extrémité ouverte, isolée de la première chambre.

2. Dispositif de pompage comprenant un moulage unitaire (25) selon la revendication 1, une pompe centrifuge (22), une vanne à boisseau sphérique (26 ; 70), et un collecteur à plusieurs orifices (30 ; 77) formant une autre partie (28 ; 75) du carter de vanne à boisseau sphérique, le collecteur comprenant un premier orifice relié à la vanne à boisseau sphérique et un second orifice (46 ; 83) relié au logement de filtre.

3. Dispositif de pompage selon la revendication 2, dans lequel le moulage (25) comprend une partie (27) d'un premier carter de vanne à boisseau sphérique sur un côté d'aspiration (S) de la pompe (22) et une partie (72) d'un second carter de vanne à boisseau sphérique sur un côté de pression (P) de la pompe, le dispositif comprenant un collecteur du côté d'aspiration (30) formant une autre partie (28) du premier carter de vanne à boisseau sphérique et un collecteur du côté de pression (77) formant une autre partie (75) du second carter de vanne à boisseau sphérique.

4. Dispositif de pompage selon la revendication 3, dans lequel le moulage comprend un premier logement de filtre (50) et un second logement de filtre (52), dans lequel le collecteur du côté d'aspiration (30) forme un passage de fluide (46) depuis le premier logement de filtre vers la première vanne à boisseau sphérique, et le collecteur du côté de pression (77) forme un passage de fluide (83) depuis le second logement de filtre vers la seconde vanne à boisseau sphérique.

5. Dispositif de pompage selon la revendication 3 ou 4, dans lequel la pompe comprend un rouet qui tourne sur un axe de pompe et dans lequel la première vanne à boisseau sphérique comprend une sortie en communication avec un côté d'entrée du carter de pompe centrifuge, la sortie étant alignée avec l'axe de pompe.

6. Dispositif de pompage selon la revendication 5, dans lequel la première vanne à boisseau sphérique tourne autour de l'axe de pompe (x) afin de raccorder sélectivement la sortie avec l'une d'une pluralité d'entrées du collecteur du côté d'aspiration.

7. Dispositif de pompage selon l'une quelconque des revendications 2 à 6, dans lequel le moulage comprend en outre une tuyauterie et dans lequel le collecteur à plusieurs orifices comprend un troisième orifice raccordé à la tuyauterie.

8. Pulvérisateur agricole (10) comprenant un dispositif de pompage selon l'une quelconque des revendications 2 à 7.

9. Pulvérisateur agricole selon la revendication 8, comprenant une station de travail d'opérateur présentant une console qui comporte une ouverture destinée à accéder au logement de filtre.

10. Pulvérisateur agricole selon la revendication 9, dans lequel la console comporte un panneau d'interface d'utilisateur (122) qui est monté sur le moulage unitaire.

11. Pulvérisateur agricole selon la revendication 9 ou 10, dans lequel la station de travail d'opérateur comporte une vanne manuelle raccordée au logement de filtre.

12. Pulvérisateur agricole selon l'une quelconque des revendications 8, 9 ou 10, lorsqu'elle dépend de la revendication 3, comprenant en outre un réservoir destiné à stocker une solution pesticide, le réservoir présentant une sortie qui est reliée à un orifice d'entrée du collecteur du côté d'aspiration.

13. Pulvérisateur agricole selon la revendication 12, dans lequel le réservoir présente une entrée qui est reliée à un orifice de sortie du collecteur du côté de pression.

14. Pulvérisateur agricole selon la revendication 12 ou 13, comprenant en outre un réservoir d'eau propre présentant une sortie qui est reliée à un orifice d'entrée du collecteur du côté d'aspiration et une entrée qui est reliée à un orifice de sortie du collecteur du côté de pression.

15. Pulvérisateur agricole selon l'une quelconque des revendications 8 à 14, lorsqu'elle dépend de la revendication 3, comprenant en outre une pluralité d'injecteurs de distribution de fluide agencés sur une flèche (16) et reliés à un orifice de sortie du collecteur du côté de pression.
